# FASCICULE DE BREVET EUROPEEN

(11) **EP 0 842 802 B1**
(45) Date de publication et mention de la délivrance du brevet: **13.02.2002**
(21) Numéro de dépôt: 97402736.9
(22) Date de dépôt: 14.11.1997
(51) Int. Cl.: B60J 1/17

(54) **Porte à vitre coulissante, notamment pour véhicule automobile**
Tür mit absenkbaren Fenster, insbesondere für Kraftfahrzeug
Door with sliding glass, especially for motor vehicle

(30) Priorité: 15.11.1996 FR 9613984
(43) Date de publication de la demande: 20.05.1998
(73) Titulaire: AUTOMOBILES PEUGEOT, 75116 Paris (FR); AUTOMOBILES CITROEN, 92200 Neuilly-sur-Seine (FR)
(72) Inventeur: Desreaux, Pascal, 35170 Bruz (FR)
(74) Mandataire: Moncheny, Michel

(56) Documents cités:
- EP-A- 0 490 733
- DE-A- 4 311 262

## Description

La présente invention concerne une porte à vitre coulissante, notamment pour véhicule automobile.

On connaît déjà dans l'état de la technique une porte, notamment pour véhicule automobile, du type comprenant une vitre montée coulissante dans la porte entre deux positions haute et basse, la vitre comprenant un bord sensiblement parallèle à la direction de coulissement de la vitre destiné à coopérer avec des moyens de guidage portés par la porte.

FR-A-2 705 391 décrit une porte pour véhicule automobile du type précité. La vitre de cette porte présente deux bords avant et arrière coopérant avec deux glissières fixes avant et arrière. La porte comporte également un organe de calage destiné à coopérer avec la vitre lorsque celle-ci est en position haute.

Les moyens de guidage de la vitre décrits dans ce document sont spécifiques à la forme de la porte. Ces moyens de guidage ne peuvent donc pas être adaptés à des formes variées de porte.

DE-A-43 11 262 décrit une porte pour véhicule automobile également du type précité. Dans ce document, les moyens de guidage comprennent, pour chaque bord avant ou arrière de la vitre, au moins deux éléments en U disposés l'un au-dessus de l'autre. Ces éléments, constituant en fait des glissières, coopèrent avec jeu avec la vitre. Ainsi, les éléments en U autorisent un débattement de la vitre entre leurs branches nécessaire pour tenir compte des tolérances de cotes.

L'invention a pour but de proposer des moyens de guidage d'une vitre adaptables sur des portes de formes variées, permettant d'éviter, notamment, le claquement de la vitre contre d'autres éléments logés dans la porte, lorsque la vitre est en position basse.

A cet effet, l'invention a pour objet une porte, notamment pour véhicule automobile, du type précité, caractérisée en ce que la vitre, d'une part, est déplaçable en étant écartée des moyens de guidage lorsqu'elle est en position haute, et d'autre part, en coopérant avec les moyens de guidage lorsqu'elle est en position basse, de manière que la course de descente de la vitre entre ses positions haute et basse présente deux parties au cours desquelles la vitre, successivement, ne coopère pas puis coopère avec les moyens de guidage, les moyens de guidage pinçant la vitre lorsqu'elle coopère avec eux.

Suivant des caractéristiques de différents modes de réalisation de l'invention :
- les moyens de guidage comprennent un corps, solidaire de la porte, portant deux organes déformables élastiquement, par exemple en caoutchouc naturel ou synthétique, destinés à pincer les faces opposées du bord de la vitre lorsque cette vitre coopère avec les moyens de guidage ;
- le corps a une forme générale en U et comporte une âme de fixation sur la porte et deux ailes s'étendant de part et d'autre des faces opposées du bord de la vitre, chaque aile portant un organe de pincement correspondant ;
- les organes de pincement sont profilés et s'étendent longitudinalement sensiblement perpendiculairement à la direction de coulissement de la vitre, les organes de pincement étant disposés symétriquement de part et d'autre de la vitre lorsque celle-ci est en position basse, la dimension longitudinale des organes de pincement profilés étant réduite par rapport à la dimension longitudinale de la vitre ;
- le profil des organes de pincement a une forme générale de flèche, chaque organe de pincement étant muni d'une pointe délimitée par deux rampes d'inclinaisons opposées, deux rampes symétriques des deux organes de pincement formant des moyens de centrage de la vitre;
- l'âme du corps est fixée sur la porte par vissage et comporte, à cet effet, un organe taraudé solidaire de l'âme ;
- la surface des organes de pincement en contact avec la vitre est traitée, par exemple par flocage, de manière à réduire les frottements avec cette vitre;
- les organes de pincement sont encliquetés dans des orifices ménagés dans les ailes du corps ;
- le corps et les organes de pincement sont venus de matière, le corps comportant un insert métallique en forme générale de U ;
- la porte comporte une barre, sensiblement longitudinale, de protection transversale de l'habitacle du véhicule, les moyens de guidage étant disposés sensiblement à la même hauteur que cette barre, de préférence au contact de cette barre.

L'invention sera mieux comprise à la lecture de la description qui va suivre donnée uniquement à titre d'exemple et faite en se référant aux dessins annexés dans lesquels :
- la figure 1 est une vue en perspective d'une porte selon l'invention munie de moyens de guidage de la vitre selon un premier mode de réalisation de cette invention;
- la figure 2 est une vue en coupe, à échelle agrandie, suivant le plan 2-2 de la figure 1 ;
- la figure 3 est une vue en coupe suivant la ligne 3-3 de la figure 2 ;
- la figure 4 est une vue en perspective d'un organe de pincement des moyens de guidage selon le premier mode de réalisation de l'invention ;
- la figure 5 est une vue en perspective des moyens de guidage de la vitre selon un second mode de réalisation de l'invention ;
- la figure 6 est une vue en coupe suivant la ligne 6-6 de la figure 5.

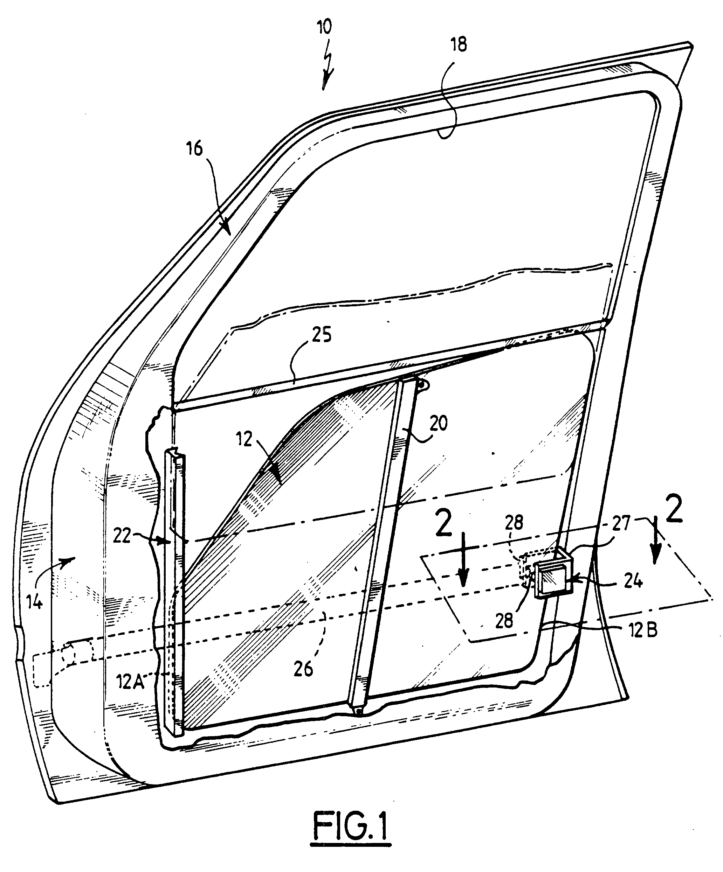

On a représenté sur la figure 1 une porte avant de véhicule automobile, désignée par la référence générale 10. Le bord avant de la porte 10 est à gauche en considérant la figure 1.

Une vitre 12 est montée coulissante dans la porte 10.

La porte 10 comporte une partie inférieure 14, formant caisson, et une partie supérieure 16 formant cadre, délimitant une baie 18 obturable par la vitre 12.

La vitre 12 est déplaçable entre une position basse d'escamotage à l'intérieur du caisson 14, comme cela est représenté en traits pleins sur la figure 1, et une position haute d'obturation de la baie 18. On a représenté sur la figure 1 la vitre 12 partiellement en traits mixtes dans une position intermédiaire entre ses positions basse et haute.

La porte 10 comporte des moyens classiques de déplacement de la vitre 12 entre ses positions haute et basse, dont on a représenté un rail 20 sensiblement vertical. Ce rail permet le guidage d'un chariot (non représenté) d'entraînement de la vitre, relié à cette vitre.

Le rail 20 est fixé de façon connue en soi dans le caisson 14.

La vitre 12 comporte deux bords avant 12A et arrière 12B sensiblement parallèles à la direction de coulissement de cette vitre. Le bord avant 12A de la vitre est monté coulissant dans une glissière 22, sensiblement rectiligne et verticale, fixée de façon connue en soi à l'avant du caisson 14 de la porte.

Le bord arrière 12B de la vitre est destiné à coopérer avec des moyens de guidage 24 fixés à l'arrière du caisson 14 de la porte.

De façon classique, la vitre 12 est déplaçable entre ses positions haute et basse à travers une fente supérieure, sensiblement longitudinale, du caisson, munie de joints lécheurs 25 participant au guidage de la vitre.

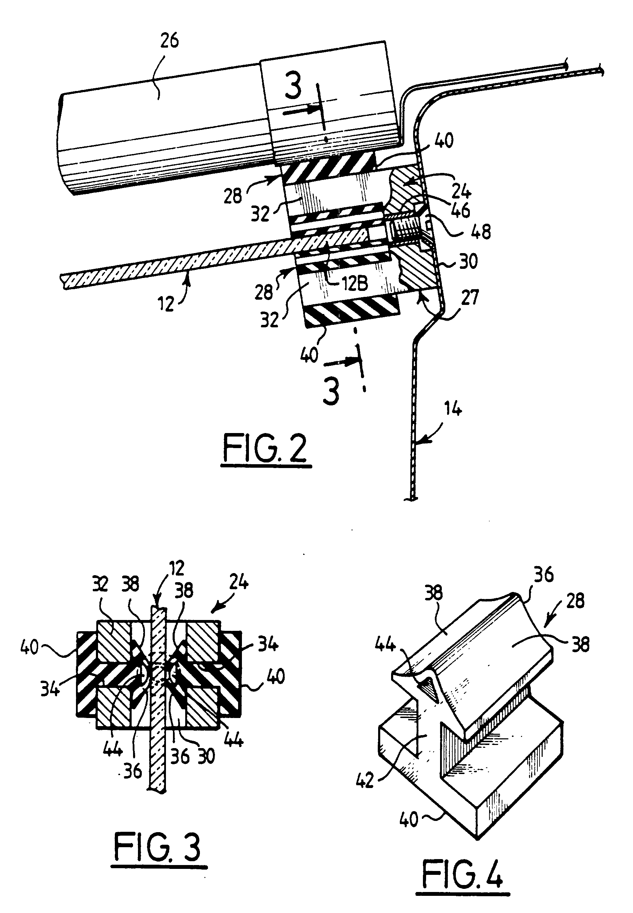

On a également représenté sur la figure 1 une barre 26, sensiblement longitudinale, de protection transversale de l'habitacle du véhicule. Les moyens de guidage 24 sont disposés sensiblement à la même hauteur que cette barre 26, de préférence au contact de cette barre, comme cela est illustré sur les figures 1 et 2.

La vitre 12, d'une part coopère avec les moyens de guidage 24, lorsqu'elle est en position basse, comme cela est illustré en traits pleins sur la figure 1, et d'autre part, est écartée, vers le haut, de ces moyens de guidage 24, lorsqu'elle est en position haute, comme cela est illustré en traits mixtes sur la figure 1.

Les moyens de guidage 24 sont illustrés sur les figures 1 à 4 selon un premier mode de réalisation de l'invention. Ces moyens de guidage seront décrits en détail ci-dessous en se référant essentiellement aux figures 2 à 4.

Les moyens de guidage 24 comprennent un corps 27 solidaire de la porte 10, portant deux organes 28 déformables élastiquement, par exemple en caoutchouc naturel ou synthétique. Ces organes déformables élastiquement sont destinés à pincer les faces opposées du bord arrière 12B de la vitre, lorsque cette vitre est en position basse.

Le corps 27 a une forme générale en U et comporte une âme 30 de fixation sur la porte et deux ailes 32, s'étendant de part et d'autre des faces opposées du bord arrière 12B de la vitre, portant chacun un organe de pincement 28.

Les organes de pincement 28 sont identiques entre eux. Un des organes 28 est représenté en détail sur la figure 4.

Les organes de pincement 28 sont encliquetés dans des orifices 34 ménagés dans les ailes 32 du corps 27. Ce corps 27 est fabriqué par exemple en alliage léger.

On notera que les organes de pincement 28 sont profilés selon un profil en forme générale de flèche muni d'une pointe 36 délimitée par deux rampes 38 d'inclinaisons opposées.

La pointe 36 d'un organe de pincement est reliée à un talon 40 par l'intermédiaire d'une hampe 42 s'étendant à travers l'orifice 34 correspondant. La pointe 36 et le talon 40 d'un organe de pincement 28 délimitent des épaulements d'immobilisation de cet organe 28 dans l'orifice 34 correspondant.

Les organes de pincement 28 s'étendent longitudinalement sensiblement perpendiculairement à la direction de coulissement de la vitre 12.

Les organes de pincement 28 sont disposés de part et d'autre de la vitre 12. Les pointes 36 de ces organes sont dirigées l'une vers l'autre et sont destinées à coopérer avec les faces opposées du bord arrière 12B de la vitre.

On notera que la dimension longitudinale des organes de pincement profilés est réduite par rapport à la dimension longitudinale de la vitre mesurée entre les deux bords avant 12A et arrière 12B de la vitre.

De préférence, les pointes 36 des organes de pincement 28 sont munies de perçages longitudinaux 44 facilitant la déformation de ces pointes au contact de la vitre 12.

En se référant à la figure 3, on voit que les deux rampes supérieures 38, symétriques, des deux organes de pincement 28 forment des moyens de centrage de la vitre 12.

En se référant à la figure 2, on notera qu'une des branches 32 du corps 27 est en contact avec la barre de protection 26 par l'intermédiaire du talon 40 de l'organe de pincement porté par cette branche 32.

En se référant toujours à la figure 2, on notera que l'âme 30 du corps est munie d'un insert taraudé 46 dans lequel est vissée une vis 48 de fixation du corps sur la porte 10. La tête de cette vis 48 prend appui sur un bord du caisson 14.

De préférence, la surface des organes de pincement 28, en contact avec la vitre 12, est traitée, par exemple par flocage, de manière à réduire les frottements avec cette vitre.

On décrira ci-dessous le fonctionnement des moyens de guidage 24 selon l'invention.

Initialement, la vitre 12 est en position haute, à l'écart des moyens de guidage 24, comme cela est représenté en traits mixtes sur la figure 1.

Lorsque la vitre 12 est baissée, celle-ci est guidée, pendant une première partie de sa course de descente, par le rail 20 (par l'intermédiaire du chariot qui coulisse dans ce rail et qui est relié à la vitre 12), par la glissière 22 (guidant le bord avant 12A de la vitre 12) et par les joints lécheurs 25, puis, pendant une seconde partie de sa course de descente et jusqu'à sa position basse, par les éléments de guidage 20,22,25 évoqués précédemment ainsi que par les moyens de guidage 24.

Ainsi, la course de descente de la vitre 12 entre ses positions haute et basse présente deux parties au cours desquelles la vitre, successivement, ne coopère pas puis coopère avec les moyens de guidage 24.

Les moyens de guidage 24 forment des moyens d'entretoisement entre la vitre 12, en position basse, et la barre de protection 26, ce qui permet d'éviter le claquement nuisible de la vitre contre la barre.

Les pointes 36 des organes de pincement 28 guident et immobilisent la vitre 12 en position basse de manière à éviter tout contact indésirable de cette vitre contre d'autres éléments logés dans le caisson 14 de la porte.

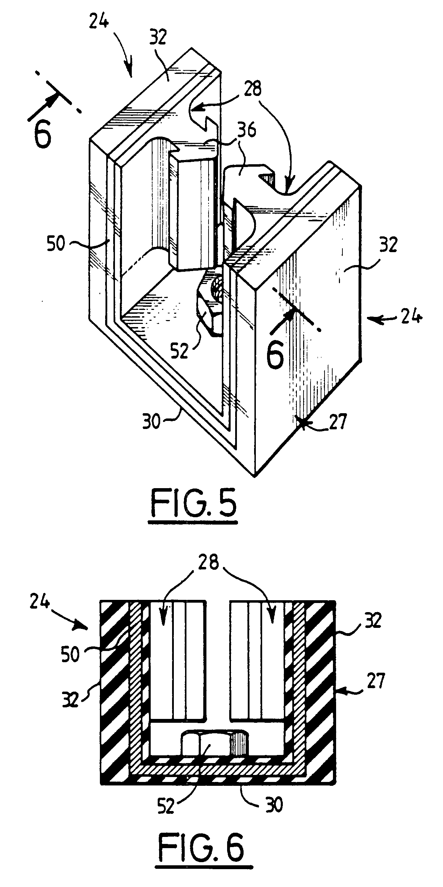

Sur les figures 5 et 6, on a représenté des moyens de guidage 24 selon un second mode de réalisation de l'invention.

Sur ces figures, les éléments analogues à ceux des figures précédentes sont désignés par des références identiques.

Dans ce second mode de réalisation des moyens de guidage, les organes de pincement 28 sont venus de matière avec le corps 27. Ce dernier comporte un insert métallique 50.

De préférence, l'âme 30 et les branches 32 du corps, en caoutchouc synthétique ou naturel, sont surmoulées avec les organes de pincement 28 sur l'insert 50.

Comme dans le mode de réalisation précédent, l'âme 30 du corps est fixée sur la porte 10 par vissage et comporte, à cet effet, un écrou 52 soudé sur l'âme de l'insert 50.

L'invention comporte de nombreux avantages.

En particulier, les moyens de guidage 24 selon l'invention, de dimensions réduites, sont adaptables sur des portes de formes variées.

Par ailleurs, ils permettent d'éviter le claquement de la vitre contre des éléments logés dans le caisson de la porte, notamment contre la barre de protection de cette porte, ceci lorsque la vitre est en position basse.

## Revendications

1. Porte, notamment pour véhicule automobile, du type comprenant une vitre (12) montée coulissante dans la porte entre deux positions haute et basse, la vitre (12) comprenant un bord (12B) sensiblement parallèle à la direction de coulissement de la vitre destiné à coopérer avec des moyens de guidage (24) portés par la porte, **caractérisée en ce que** la vitre (12), d'une part, est déplaçable en étant écartée des moyens de guidage (24) lorsqu'elle est en position haute, et d'autre part, en coopérant avec les moyens de guidage (24) lorsqu'elle est en position basse, de manière que la course de descente de la vitre (12) entre ses positions haute et basse présente deux parties au cours desquelles la vitre, successivement, ne coopère pas puis coopère avec les moyens de guidage (24), les moyens de guidage (24) pinçant la vitre (12) lorsqu'elle coopère avec eux.

2. Porte selon la revendication 1, **caractérisée en ce que** les moyens de guidage (24) comprennent un corps (27), solidaire de la porte, portant deux organes (28) déformables élastiquement, par exemple en caoutchouc naturel ou synthétique, destinés à pincer les faces opposées du bord (12B) de la vitre lorsque cette vitre coopère avec les moyens de guidage (24).

3. Porte selon la revendication 2, **caractérisée en ce que** le corps (27) a une forme générale en U et comporte une âme (30) de fixation sur la porte et deux ailes (32) s'étendant de part et d'autre des faces opposées du bord (12B) de la vitre, chaque aile portant un organe de pincement (28) correspondant.

4. Porte selon la revendication 2 ou 3, **caractérisée en ce que** les organes de pincement (28) sont profilés et s'étendent longitudinalement sensiblement perpendiculairement à la direction de coulissement de la vitre (12), les organes de pincement (28) étant disposés symétriquement de part et d'autre de la vitre (12) lorsque celle-ci est en position basse, la dimension longitudinale des organes de pincement profilés (28) étant réduite par rapport à la dimension longitudinale de la vitre (12).

5. Porte selon la revendication 4, **caractérisée en ce que** le profil des organes de pincement (28) a une forme générale de flèche, chaque organe de pincement (28) étant muni d'une pointe (36) délimitée par deux rampes (38) d'inclinaisons opposées, deux rampes (38) symétriques des deux organes de pincement (28) formant des moyens de centrage de la vitre (12).

6. Porte selon l'une quelconque des revendications 3 à 5, **caractérisée en ce que** l'âme (30) du corps (27) est fixée sur la porte par vissage et comporte, à cet effet, un organe taraudé (46;52) solidaire de l'âme (30).

7. Porte selon l'une quelconque des revendications 2 à 6, **caractérisée en ce que** la surface des organes de pincement (28) en contact avec la vitre (12) est traitée, par exemple par flocage, de manière à réduire les frottements avec cette vitre.

8. Porte selon l'une quelconque des revendications 2 à 7, **caractérisée en ce que** les organes de pincement (28) sont encliquetés dans des orifices (34) ménagés dans les ailes (32) du corps.

9. Porte selon l'une quelconque des revendications 2 à 7, **caractérisée en ce que** le corps (27) et les organes de pincement (28) sont venus de matière, le corps (27) comportant un insert métallique (50) en forme générale de U.

10. Porte pour véhicule automobile, selon l'une quelconque des revendications précédentes, **caractérisée en ce qu'**elle comporte une barre (26), sensiblement longitudinale, de protection transversale de l'habitacle du véhicule, les moyens de guidage (24) étant disposés sensiblement à la même hauteur que cette barre (26), de préférence au contact de cette barre.

## Patentansprüche

1. Tür insbesondere für Kraftfahrzeuge mit einer Fensterscheibe (12), die in der Tür zwischen zwei Stellungen, einer oberen und einer unteren, verschiebbar angeordnet ist, wobei die Fensterscheibe (12) einen zu ihrer Gleitrichtung im wesentlichen parallelen Rand (12B) aufweist, der dazu bestimmt ist, mit von der Tür getragenen Führungsmitteln (24) zusammenzuwirken, **dadurch gekennzeichnet, dass** die Fensterscheibe (12) beweglich ist, indem sie einerseits von den Führungsmitteln (24) entfernt ist, wenn sie sich in der oberen Stellung befindet, und indem sie andererseits mit den Führungsmitteln (24) zusammenwirkt, wenn sie sich in der unteren Stellung befindet, so dass die Abwärtsbewegung der Fensterscheibe (12) zwischen ihrer oberen und ihrer unteren Stellung aus zwei Teilen besteht, während derer die Fensterscheibe nacheinander nicht mit den Führungsmitteln (24) zusammenarbeitet und dann mit diesen zusammenarbeitet, wobei die Führungsmittel (24) die Fensterscheibe (12) einklemmen, wenn diese mit ihnen zusammenwirkt.

2. Tür nach Anspruch 1, **dadurch gekennzeichnet, dass** die Führungsmittel (24) einen mit der Tür fest verbundenen Körper (27) aufweisen, der zwei elastisch verformbare Organe (28)beispielsweise aus Natur- oder Kunstkautschuk trägt, die dazu bestimmt sind, die einander entgegengesetzten Seiten des Randes (12B) der Fensterscheibe einzuklemmen, wenn die Fensterscheibe mit den Führungsmitteln (24) zusammenwirkt.

3. Tür nach Anspruch 2, **dadurch gekennzeichnet, dass** der Körper (27) allgemein U-förmig ist und einen Steg (30) zur Befestigung an der Tür und zwei Schenkel (32) aufweist, die sich zu beiden Seiten der einander entgegengesetzten Seiten des Randes (12B) der Fensterscheibe erstrecken, wobei jeder Schenkel ein entsprechendes Klemmorgan (28) trägt.

4. Tür nach Anspruch 2 oder 3, **dadurch gekennzeichnet, dass** die Klemmorgane (28) profiliert sind und sich in Längsrichtung im wesentlichen senkrecht zur Gleitrichtung der Fensterscheibe (12) erstrecken, wobei die Klemmorgane (28) symmetrisch zu beiden Seiten der Fensterscheibe (12) angeordnet sind, wenn diese die untere Stellung einnimmt, wobei die Längsabmessung der profilierten Klemmorgane (28) bezüglich der Längsabmessung der Fensterscheibe (12) reduziert ist.

5. Tür nach Anspruch 4, **dadurch gekennzeichnet, dass** das Profil der Klemmorgane (28) allgemein pfeilförmig ist, wobei jedes Klemmorgan (28) mit einer Spitze (36) versehen ist, die von zwei entgegengesetzt geneigten Schrägflächen (38) abgegrenzt ist, wobei zwei symmetrische Schrägflächen (38) der beiden Klemmorgane (28) Mittel zur Zentrierung der Fensterscheibe (12) bilden.

6. Tür nach einem der Ansprüche 3 bis 5, **dadurch gekennzeichnet, dass** der Steg (30) des Körpers (27) an der Tür durch Verschraubung befestigt ist und zu diesem Zweck ein mit Innengewinde versehenes Organ (46;52) aufweist, das mit dem Steg (30) fest verbunden ist.

7. Tür nach einem der Ansprüche 2 bis 6, **dadurch gekennzeichnet, dass** die mit der Fensterscheibe (12) in Kontakt kommende Oberfläche der Klemmorgane (28) zur Verringerung der Reibungen an dieser Fensterscheibe beispielsweise durch Beflockung behandelt ist.

8. Tür nach einem der Ansprüche 2 bis 7, **dadurch gekennzeichnet, dass** die Klemmorgane (28) in Öffnungen (34) eingeklinkt sind, die in den Schenkeln (32) des Körpers vorgesehen sind.

9. Tür nach einem der Ansprüche 2 bis 7, **dadurch gekennzeichnet, dass** der Körper (27) und die Klemmorgane (28) aus einem Material gebildet sind, wobei der Körper (27) einen allgemein U-förmigen Metalleinsatz (50) aufweist.

10. Tür für Kraftfahrzeuge nach einem der vorhergehenden Ansprüche, **dadurch gekennzeichnet, dass** sie eine sich im wesentlichen in Längsrichtung erstreckende Stange (26) zum Querschutz des Karosseriegehäuses des Fahrzeugs aufweist, wobei die Führungsmittel (24) im wesentlichen in derselben Höhe wie diese Stange (26) und vorzugsweise im Kontakt mit dieser Stange angeordnet sind.

## Claims

1. Door, particularly for a motor vehicle, of the type comprising a window (12) mounted to slide in the door between a raised position and a lowered position, the window (12) comprising an edge (12B) approximately parallel to the direction of sliding of the window intended to collaborate with guide means (24) carried by the door, **characterized in that** the window (12), on the one hand, is movable, by being moved away from the guide means (24) when in the raised position, and, on the other hand, by being in collaboration with the guide means (24) when it is in the lowered position, so that the downward travel of the window (12) between its raised and lowered positions is in two parts during which, in succession, the window does not collaborate with and then does collaborate with the guide means (24), the guide means (24) gripping the window (12) when it collaborates with them.

2. Door according to Claim 1, **characterized in that** the guide means (24) comprise a body (27) secured to the door, carrying two elastically deformable members (28), for example made of natural or synthetic rubber, which are intended to grip the opposed sides of the edge (12B) of the window when this window is collaborating with the guide means (24).

3. Door according to Claim 2, **characterized in that** the body (27) has the overall shape of a U and comprises a web (30) attaching to the door and two flanges (32) extending one on each side of the opposite sides of the edge (12B) of the window, each flange carrying a corresponding gripping member (28).

4. Door according to Claim 2 or 3, **characterized in that** the gripping members (28) are profiled and run longitudinally approximately at right angles to the direction of sliding of the window (12), the gripping members (28) being arranged symmetrically on each side of the window (12) when the latter is in the lowered position, the longitudinal dimension of the profiled gripping members (28) being small by comparison with the longitudinal dimension of the window (12).

5. Door according to Claim 4, **characterized in that** the profile of the gripping members (28) is in the general shape of an arrow, each gripping member (28) having a tip (36) delimited by two ramps (38) inclined in opposite directions, two symmetric ramps (38) of the two gripping members (28) forming means for centring the window (12),

6. Door according to any one of Claims 3 to 5, **characterized in that** the web (30) of the body (27) is fixed to the door by screwing and for this purpose comprises a tapped member (46; 52) secured to the web (30).

7. Door according to any one of Claims 2 to 6, **characterized in that** the surface of the gripping members (28) in contact with the window (12) is treated, for example by flock coating, so as to reduce the friction with this window.

8. Door according to any one of Claims 2 to 7, **characterized in that** the gripping members (28) are clipped into orifices (34) formed in the flanges (32) of the body.

9. Door according to any one of Claims 2 to 7, **characterized in that** the body (27) and the gripping members (28) are formed integrally with each other, the body (27) having a metal insert (50) in the overall shape of a U.

10. Motor vehicle door according to any one of the preceding claims, **characterized in that** it comprises an approximately longitudinal protective bar (26), transverse with respect to the cabin of the vehicle, the guide means (24) being arranged at approximately the same height as this bar (26) and preferably in contact with this bar.
